# EUROPEAN PATENT APPLICATION

(11) **EP 4 560 396 A2**
(43) Date of publication of application: **28.05.2025**
(21) Application number: 24214291.7
(22) Date of filing: 20.11.2024
(51) Int. Cl.: G03B 3/10, G02B 7/10, G02B 15/14, G02B 23/08, F41G 1/40, G02B 7/28

(54) **CAMERA SIGHT SYSTEM**

(30) Priority: 22.11.2023 US 202363601765 P; 16.08.2024 CN 202411135019
(71) Applicant: Taizhou Guanyu Technology Co., Ltd., Taizhou City, Zhejiang Province (CN)
(72) Inventor: HSU, KUO-CHENG, TAICHUNG CITY 406, TAIWAN (R.O.C.) (TW); HU, GENGSHUO, TAIZHOU CITY, ZHEJIANG PROVINCE, P.R.C. (CN)
(74) Representative: Michalski Hüttermann & Partner Patentanwälte mbB

(57) **Abstract**

The present disclosure provides a camera sight system including a camera module. The camera module includes a zoom device and a sensor device. The zoom device includes a scope for receiving incident light, multiple prisms, multiple periscopes, and an autofocus motor. The sensor device is for sensing the incident light passing through an optical path of the zoom device to generate a scene image. The scope, the multiple periscopes and the multiple prisms form the optical path with multiple refractions and multiple transmissions. The autofocus motor is configured to adjust displacement of the multiple periscopes along the optical path according to a control signal to adjust focal lengths of the multiple periscopes to change an overall length of the optical path.

## Description

### TECHNICAL FIELD

The present disclosure relates to a camera sight system.

### DESCRIPTION OF THE RELATED ART

A camera sight system applied to a shooting device uses an image sensor to capture a scene image. Although commercially available camera sight systems are capable of aiming at a distant target object using higher optical magnifications (e.g., 3 times or 5 times), they come with an issue of being unable to zoom. Moreover, shooting devices often generate significant vibrations when firing, and current camera sight systems are specially design to be vibration-proof or impact-resistant, which can easily lead to damage to the lens assembly. Therefore, there is a need for a novel camera sight system.

### SUMMARY

The present disclosure provides a camera sight system including a camera module. The camera module includes a zoom device and a sensor device. The zoom device includes a scope for receiving incident light, multiple prisms, multiple periscopes, and an autofocus motor. The sensor device is for sensing the incident light passing through an optical path of the zoom device to generate a scene image. The scope, the multiple periscopes and the multiple prisms form the optical path with multiple refractions and multiple transmissions. The autofocus motor is configured to adjust displacement of the multiple periscopes along the optical path according to a control signal to adjust focal lengths of the multiple periscopes to change an overall length of the optical path.

In some embodiments, the camera sight system further includes an eyeglasses module. The eyeglasses module includes: a communication module, configured to communicatively connect to the camera module; and a display apparatus, configured to receive the scene image generated by the sensor device from the camera module, and display the scene image, wherein the scene image includes a crosshair pattern.

In some embodiments, the multiple prisms include a first prism, a second prism, a third prism and a fourth prism, wherein the optical path sequentially passes through the scope, the first prism, the second prism, the third prism and the fourth prism, and the first prism, the second prism, the third prism and the fourth prism refract the incident light by 90 degrees.

In some embodiments, the multiple periscopes include a first periscope and a second periscope disposed between the second prism and the third prism and perpendicular to the optical path, and the autofocus motor is configured to adjust the displacement of the first periscope and the second periscope on a horizontal axis according to the control signal.

In some embodiments, the multiple periscopes include a first periscope, a second periscope, a third periscope and a fourth periscope. The first periscope and the second periscope are disposed between the first prism and the second prism, and are perpendicular to the optical path. The third periscope and the fourth periscope are disposed between the third prism and the fourth prism, and are perpendicular to the optical path. The autofocus motor is configured to adjust the displacement of the first periscope, the second periscope, the third periscope and the fourth periscope on a vertical axis according to the control signal.

In some embodiments, the sensor device includes a color image sensor, a thermal imager, a night vision apparatus, or a GeSi sensor.

In some embodiments, the camera module includes a tuned damper, and the tuned damper and the camera module form a tuned vibration damping structure.

In some embodiments, the camera module further includes a gyroscope, and the zoom device is disposed on the gyroscope to damp vibrations of the zoom device.

In some embodiments, the zoom device includes a housing, and multiple piezoelectric sheets are disposed at fixed angles on a same surface of the housing, and are for detecting external vibrations of the camera module to generate corresponding piezoelectric signals. The camera module further includes a microcontroller for analyzing the piezoelectric signals from the piezoelectric sheets to generate control signals with a same frequency and amplitude in an opposite phase to feed back to the piezoelectric sheets to damp vibrations of the zoom device.

### BRIEF DESCRIPTION OF THE DRAWINGS

FIG. 1 illustrates a camera sight system according to some embodiments of the present disclosure.
FIG. 2A illustrates a first zoom configuration of a camera module according to some embodiments of the present disclosure.
FIG. 2B illustrates a second zoom configuration of a camera module according to some embodiments of the present disclosure.
FIG. 3 is a schematic diagram illustrating a scenario of use of a camera sight system according to some embodiments of the present disclosure.
FIG. 4 is a schematic diagram of a first configuration illustrating a passive anti-vibration function of a camera sight system according to some embodiments of the present disclosure.
FIG. 5 is a schematic diagram illustrating a second configuration of a passive anti-vibration function of a camera sight system according to some embodiments of the present disclosure.
FIG. 6 is a schematic diagram illustrating a third configuration of a passive anti-vibration function of a camera sight system according to some embodiments of the present disclosure.
FIG. 7 is a schematic diagram illustrating an active anti-vibration function of a camera sight system according to some embodiments of the present disclosure.

### DETAILED DESCRIPTION

The disclosure below provides various different embodiments or examples used to implement different elements of the subject matter of the disclosure. Specific examples of operations, components and configurations are provided in the description below to simplify the disclosure. However, such description is merely examples and is not intended to be restrictive. For example, in the description, a first operation performed before or after a second operation may include an embodiment in which the first and second operations are performed together, and may further include an embodiment in which an additional operation is performed between the first and second operations. For example, in the description below, a first element formed on, above or in a second element may include an embodiment in which the first and second elements are formed in a direct contact manner, and may further include an embodiment in which an additional element is formed between the first and second elements in a way that the first element and the second element are not in indirect contact with each other. Moreover, reference numerals and/or alphabetical symbols may be repeated in the various embodiments of the present disclosure. Such repetition is for the sake of brevity and clarity and does not indicate relations of the various embodiments and/or configurations discussed herein.

For better description, for example, relative temporal terms such as "before", "prior to", "after", "subsequent to" and the like may be used in the description of a relation between one operation or component and another (some other) operations and components, as depicted in the drawings. These relative temporal terms are intended to cover different operation sequences depicted in the drawings. Moreover, for better description, for example, relative spatial terms such as "below", "beneath", "under", "above", "on top of" and "over" and the like may be used in the description of a relation between one component or element and another (some other) components and elements, as depicted in the drawings. In addition to orientations illustrated in the drawings, these relative spatial terms further include other orientations of a device in use or in operation. A device may be orientated by other means (rotated by 90 degrees or having another orientation), and descriptive relative spatial terms used herein may also be similarly and correspondingly interpreted. For better description, relative connection terms such as "connect", "connected", "connection", "couple", "coupled", "in communication" and the like may be used herein to describe an operation connection, coupling or link between two components or elements. These relative connection terms are intended to cover different connections, couplings or links of devices or components. Devices or components may be directly or indirectly connected, coupled or linked to each other via another component. The devices or components may be connected, coupled or linked to each other in a wired and/or wireless manner.

As used herein, singular terms such as "a/an", "one" and "the" may include multiple reference objects, unless otherwise specified in the context. For example, the reference for a device may include multiple devices, unless otherwise specified in the context. The terms "include" and "comprise" may refer to the existence of described features, integers, steps, operations, elements and/or components, without necessarily excluding the existence of a combination of one or more of the features, integers, steps, operations, elements and/or components. The term "and/or" may include any or all of combinations of one or more listed items.

Moreover, sometimes the form of a range is used herein to present a quantity, a ratio or other values. It should be understood that, the form of a range is used for the sake of convenience and brevity, and should be flexibly understood as including an explicitly specified value limited within a range, and also covers all of individual values or sub-ranges covered within the range as if the individual values and sub-ranges are explicitly specified.

Properties and use of the embodiments are described in detail below. However, it should be understood that, the present disclosure provides numerous suitable inventive concepts that can be embodied in a variety of specific contexts. The specific embodiments discussed herein merely depict specific approaches embodying and using the present disclosure and are not to be construed as limitations to the present disclosure.

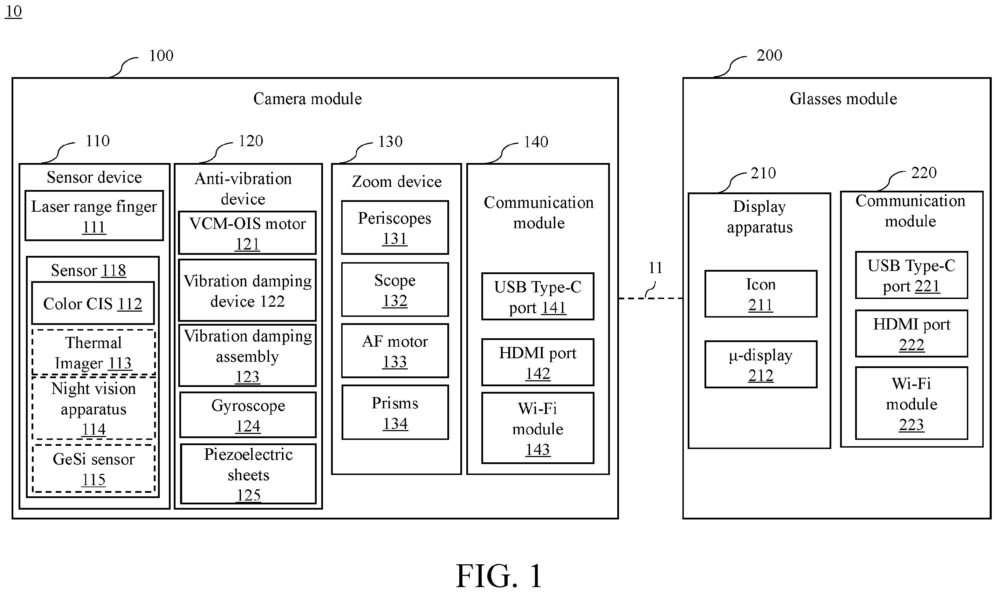

FIG. 1 illustrates a camera sight system according to some embodiments of the present disclosure.

In some embodiments, the camera sight system 10 includes a camera module 100 and an eyeglasses module 200. The camera module 100 includes a sensor device 110, an anti-vibration device 120, a zoom device 130, and a communication module 140. The eyeglasses module 200 includes a display apparatus 210 and a communication module 220. The display apparatus 210 includes an icon 211 and a micro-display (µ-display) 212. For example, a user may wear the eyeglasses module 200. In some embodiments, the communication module 140 of the camera module 100 may be communicatively connected to the communication module 220 in the eyeglasses module 200, and a link 11 may be a wireless link established between Wi-Fi modules 143 and 223, or a physical transmission line between USB (Universal Serial Bus) Type-C ports 141 and 221 or between HDMI (High Definition Multimedia Interface) ports 142 and 222. The camera module 100 may transmit a scene image or a target object image detected to the eyeglasses module 200 via the link 11, and display the scene image or the target object image on the micro-display 212 on the eyeglasses module 200. The eyeglasses module 200 may further receive a display signal from the camera module 100 to display the icon 211 and a display image on the micro-display 212. In some embodiments, the communication module 220 includes the USB Type-C port 221, the HDMI port 222 and the Wi-Fi module 223, and the eyeglasses module 200 may receive a display signal from the camera module 100 or other devices via the USB Type-C port 221, the HDMI port 222, or the Wi-Fi module 223 in the communication module 220, and display the display signal on the micro-display 212.

In some embodiments, the sensor device 110 includes a laser range finder 111 and a sensor 118. In some embodiments, the camera module 100 may measure a distance between a target object and the camera module 100 by the laser range finder 111. In some embodiments, the sensor 118 may sense light of a scene or a target object by a periscope 131 and a scope 132 to generate a sensed image. The sensor 118 may be one of a color image sensor (CIS) 112, a thermal imager 113, a night vision apparatus 114, and a germanium silicon (GeSi) sensor 115. In other words, the camera sight system 10 can be configured with different sensors 118 on different product models according to different usage requirements and scenarios. In some embodiments, when the camera sight system 10 is used for daytime scenes, the sensor 118 configured in the camera sight system 10 may be implemented by the color image sensor 112 to sense a color image. In some other embodiments, when the camera sight system 10 is used for nighttime scenes, the sensor 118 may be implemented by the thermal imager 113 to detect thermal radiation information of a target object to obtain a thermal image of the target object, or the sensor 118 may be implemented by the night vision apparatus 114 to observe a target object by infrared (IR) light at night to obtain an infrared image of the target object. In some other embodiments, when the camera sight system 10 is used for 3D sensing, the sensor 118 may be implemented by the GeSi sensor 115 to sense an infrared image of the target obj ect by short-wave infrared light. Moreover, the GeSi sensor 115 has a function of 3D time-of-flight (ToF) depth detection, which may also be used to measure a distance of a target object. In some embodiments, when the camera sight system 10 is configured with the GeSi sensor 115, the laser range finder 111 may be omitted. For purposes of description, in the following embodiments, the sensor 118 is implemented by the color image sensor 112 to sense the light of a scene or a target object.

In some embodiments, the camera module 100 may be disposed on the anti-vibration device 120 to achieve vibration and impact resistance. The anti-vibration device 120 includes a voice coil motor for optical image stabilization (VCM-OIS) 121, which may use Lorentz force between an energized coil and a magnet to drive the zoom device 130 to achieve the desired optical image stabilization function. In some embodiments, the anti-vibration device 120 further includes a vibration damping device 122, a vibration damping assembly 123, a gyroscope 124, and piezoelectric sheets 125. The piezoelectric sheets 125 are considered as an active control vibration damping device, and the vibration damping device 122, the vibration damping assembly 123, and the gyroscope 124 are considered as passive control vibration damping devices, the details of which will be described later.

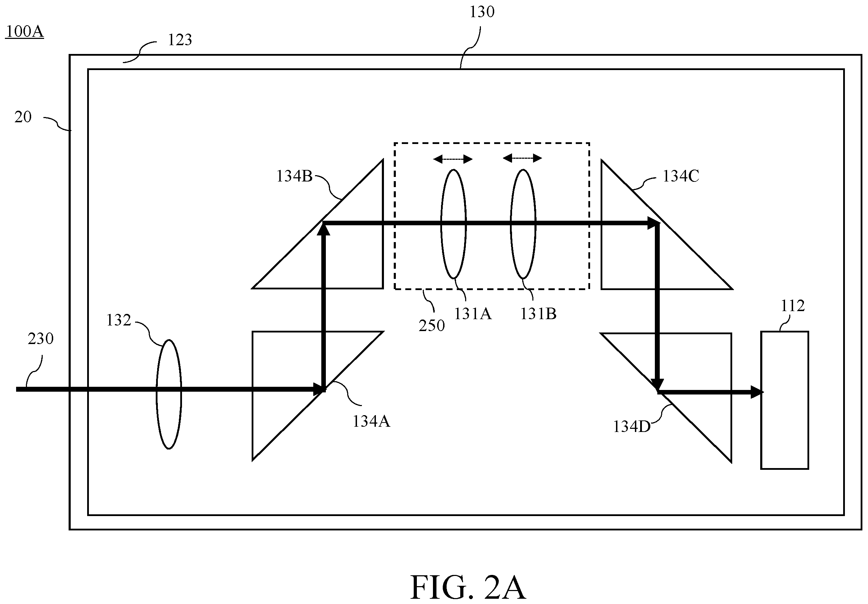

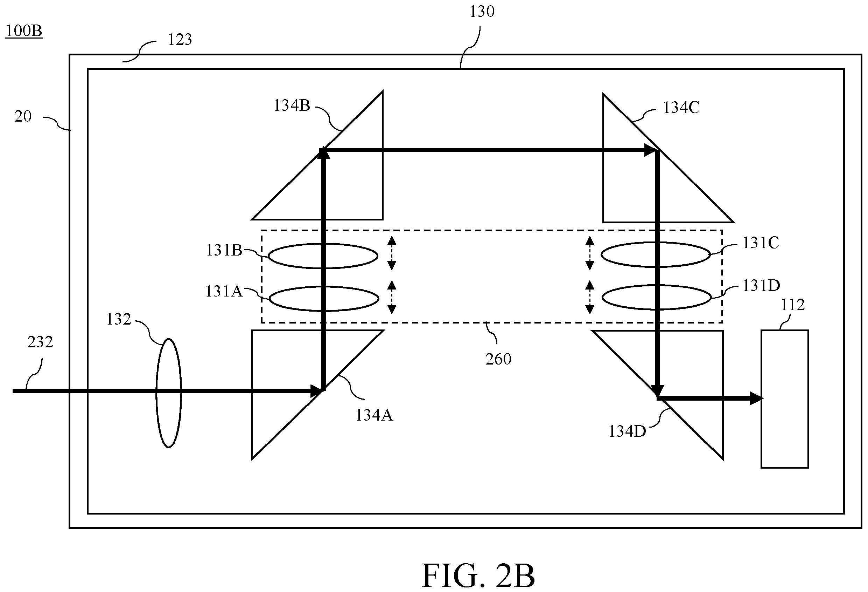

In some embodiments, the zoom device 130 includes a periscope 131 (e.g., including periscopes 131A to 131D shown in FIG. 2A and FIG. 2B), a scope 132, an autofocus (AF) motor 133 and a prism 134 (e.g., including prisms 134A to 134D). In some embodiments, the periscopes 131A to 131D may be implemented by lenses. In some embodiments, a user may operate the eyeglasses module 200 (or via other external control devices) to generate t a control signal for controlling an optical zoom magnification to be transmitted to the camera module 100, and the AF motor 133 may control displacement of the periscopes 131A to 131D in a horizontal vertical direction, according to the control signal, to adjust focal lengths of the periscopes 131A to 131D and a length of an optical path of the incident light sensed by the sensor 118, thereby realizing a high-magnification optical zoom function of the camera module 100. In some embodiments, the AF motor 133 may be integrated to the VCM-OIS 121, meaning that the VCM-OIS 121 may include driving the zoom device 130 to move in order to achieve the required autofocus and optical image stabilization functions. It should be noted that, commercially available smartphones (e.g., iPhone and Android phones) using periscope designs adopt a fixed focal length (i.e., telephoto fixed focal length lenses). Although lens modules of these smartphones are able to achieve a 3x or 5x optical focal length through the periscopes, the focal lengths thereof are non-adjustable, possibly leading to image blurring at certain focal lengths. Moreover, these smartphones are only configured with the optical image stabilization function and are not specially designed with active vibration damping or passive vibration damping functions to protect the lens assembly against more severe external vibrations.

FIG. 2A illustrates a first zoom configuration of a camera module according to some embodiments of the present disclosure.

As shown in FIG. 2A, in the first zoom configuration of the camera module 100, the periscopes 131A and 131B are disposed between the prisms 134B and 134C, and the zoom device 130 does not include the periscope 131C or 131D. The incident light, for example, follows the optical path 230 sequentially passing through the scope 132 (by transmission), the prism 134A (by 90-degree refraction), the prism 134B (by 90-degree refraction), the periscope 131A (by transmission), the periscope 131B (by transmission), the prism 134C (by 90-degree refraction) and the prism 134D (by 90-degree refraction) to enter the color image sensor 112. In some embodiments, the periscopes 131A and 131B in a region 250 may be collectively considered a periscope group, and the AF motor 133 can control the displacement of the periscope group in a first direction (e.g., the X axis), thereby adjusting the focal lengths of the periscopes 131A and 131B to change the overall length of the optical path 230. Thus, the camera sight system 10 can achieve the function of quick zooming of the telephoto lenses. In some other embodiments, the AF motor 133 can separately control the displacement of the periscopes 131A and 131B in the first direction (e.g., the X axis), thereby adjusting the focal lengths of the periscopes 131A and 131B to change the overall length of the optical path 230. In this hardware configuration, the camera sight system 10 can also achieve the function of quick zooming of the telephoto lenses.

FIG. 2B illustrates a second zoom configuration of a camera module according to some embodiments of the present disclosure.

As shown in FIG. 2B, in the second zoom configuration of the camera module 100, the periscopes 131A and 131B are disposed between the prisms 134A and 134B, and the periscopes 131C and 131D are disposed between the prisms 134C and 134D. The incident light, for example, follows the optical path 232 sequentially passing through the scope 132 (by transmission), the prism 134A (by 90-degree refraction), the periscope 131A (by transmission), the periscope 131B (by transmission), the prism 134B (by 90-degree refraction), the prism 134C (by 90-degree refraction), the periscope 131C (by transmission), the periscope 131D (by transmission) and the prism 134D (by 90-degree refraction) to enter the color image sensor 112. In some embodiments, in a region 260, the periscopes 131A and 131B may be collectively considered a first periscope group, and the periscopes 131C and 131D may be collectively considered a second periscope group. The AF motor 133 may separately control the displacement of the first periscope group and the second periscope group in a second direction (e.g., the Y axis), thereby adjusting the focal lengths of the periscopes 131A to 131D to change the overall length of the optical path 232. Thus, the camera sight system 10 can achieve the function of quick zooming of the telephoto lenses. In some other embodiments, the AF motor 133 may separately control the displacement of the periscopes 131A to 131D in the second direction (e.g., the Y axis), further adjusting the focal lengths of the periscopes 131A to 131D to change the overall length of the optical path 232. In this hardware configuration, the camera sight system 10 can achieve the function of quick zooming of the telephoto lenses.

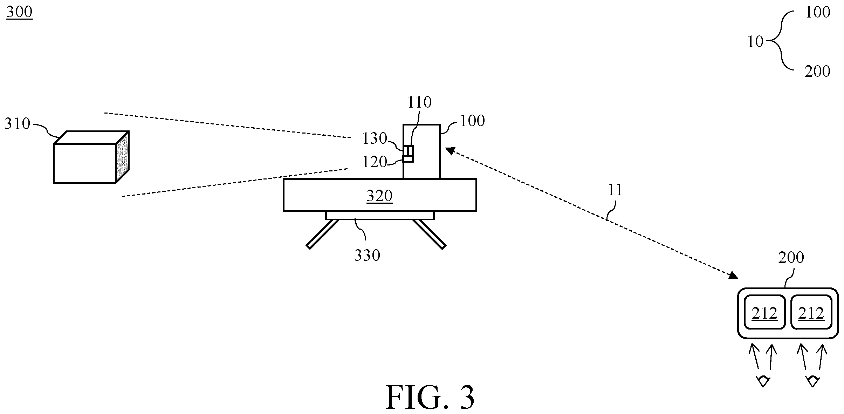

FIG. 3 is a schematic diagram illustrating a usage scenario of a camera sight system according to some embodiments of the present disclosure.

In some embodiments, the camera sight system 10 may be disposed in a scene 300; for example, the camera module 100 may be fixed above a shooting device 320 to aim at a target object 310. The shooting device 320 is disposed on a support component 330, which may be a fixed gun rack/mount or a mechanical/robotic arm for supporting and fixing the shooting device 320, and can control the firing operations of the shooting device 320,but the present disclosure is not limited thereto. Moreover, the camera module 100 is communicatively connected to the eyeglasses module 200 through the link 11 (e.g., a Wi-Fi connection) and transmits the sensed scene image to the eyeglasses module 200 through the link 11. The user may wear the eyeglasses module 200 to view the scene image from the micro-display 212 on the display apparatus 210. Additionally, the display apparatus 210 may overlay a reticle pattern on the scene image to facilitate the user in aiming at the target object 310 and firing. In some embodiments, the user may send a control signal to the support component 330 (for example, a mechanical arm) via the eyeglasses module 200 to adjust an aiming direction of the shooting device 320. In some other embodiments, the user does not need to bring their eyes close to the camera module 100 for aiming, and may use other physical objects to adjust an aiming direction of the shooting device 320 to facilitate aiming at the target object 310 and firing.

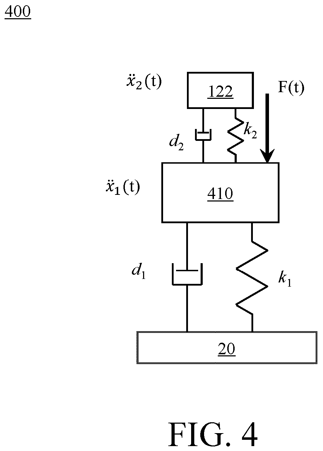

FIG. 4 is a schematic diagram illustrating a first configuration of a passive anti-vibration function of a camera sight system according to some embodiments of the present disclosure. Please refer to FIG. 1, FIG. 3 and FIG. 4 at the same time.

In some embodiments, since the camera module 100 is fixed on the shooting device (e.g., the shooting device 320 shown in FIG. 3), when the user fires the shooting device, the camera module 100 is prone to damage due to drastic vibrations during firing. Thus, an energy-dissipation vibration damping structure or a tuned vibration damping structure may be added to the structure of the camera module 100 of the present disclosure to passively reduce vibrations to achieve the anti-vibration function.

In some embodiments, as shown in FIG. 4, a vibration damping structure 400 includes a main system 410 and the vibration damping device 122, wherein the main system 410 is, for example, disposed on a housing 20 of the camera module 100. The tuning parameters of the main system 410 are (m1, d1, k1), which represent an effective mass m1, a damping coefficient d1, and an effective stiffness k1, and the vibration damping device 122 is a tuned damper. In some embodiments, the main system 410 includes at least the sensor device 110 and the zoom device 130 shown in FIG. 1. In some other embodiments, the main system 410 is, for example, the camera module 100 shown in FIG. 1.

The tuning parameters of the vibration damping device 122 (i.e., the tuned damper) are (m2, d2, k2), which represent an effective mass m2, a damping coefficient d2, and an effective stiffness k2. More specifically, the effective mass m2 provides an inertial force, the damping coefficient d2 provides an energy dissipation mechanism, and the effective stiffness k2 provides a restoring force. Moreover, an inherent frequency of the vibration damping device 122 is close to a control frequency (including a fundamental frequency and a first frequency) of the main system 410. When the control frequency of the main system 410 is excited and causes intense vibration, the vibration damping device 122 will generate resonant motion opposite to the main system 410 due to the inertia and restoring force of the effective mass 122.. For example, the second-order differential equation *x*_{2̈}(t) of motion of the vibration damping device 122 is substantially opposite to the second-order differential equation xi(t) of motion of the main system 410. Thus, during the vibration process, part of energy of the main system 410 will be transmitted to the vibration damping device 122 and dissipated by the damper (with the damping coefficient d2) in the vibration damping device 122, thereby enabling the camera module 100 to achieve the vibration damping function.

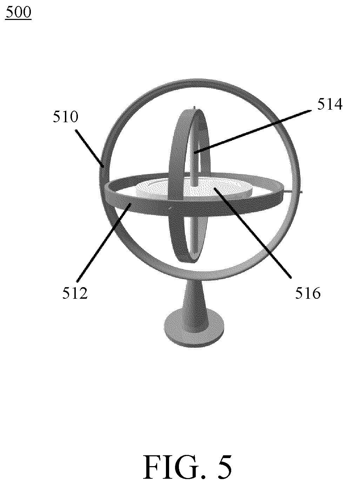

FIG. 5 is a schematic diagram illustrating a second configuration of a passive anti-vibration function of a camera sight system according to some embodiments of the present disclosure.

In some embodiments, the camera module 100 includes the gyroscope 124, which can be implemented by, for example, a gyroscope 500 in FIG. 5. For example, the gyroscope 500 includes a frame 510, a gimbal 512, a spin axis 514, and a rotor 516. Thus, when the rotor 516 of the gyroscope 500 rotates at a high speed, if vibration occurs, the gyroscope 500 sways in the direction of the vibration. If the potential energy of the vibrational force from an external force is lower than the rotational potential energy of the gyroscope 500, because the gyroscope 500 itself will rotate, the point of force will move from the lower diagonal to the upper diagonal. Due to the property of conservation of angular momentum of the gyroscope 500, the vibrational potential energy remains operative in the original direction, thereby enabling the camera module to achieve a vibration damping function.

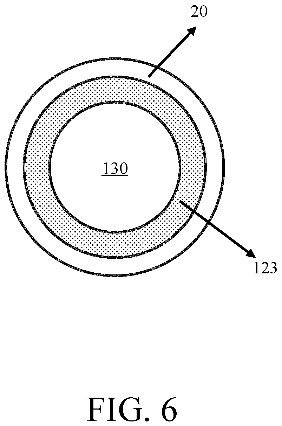

FIG. 6 is a schematic diagram illustrating a third configuration of a passive anti-vibration function of a camera sight system according to some embodiments of the present disclosure.

In some embodiments, the vibration damping assembly 123 is provided between the zoom device 130 of the camera module 100 and its housing 20, as shown in FIG. 6. The vibration damping assembly 123 includes, for example, elastic components and damping components. The elastic components include a horizontal elastic component, a vertical elastic component, an axial elastic component, a horizontal-axis rotational elastic component, a vertical-axis rotational elastic component, and/or an axial rotational elastic component. The damping components include a horizontal damping component, a vertical damping component, an axial damping component, a horizontal-axis rotational damping component, a vertical-axis rotational damping component, and/or an axial rotational damping component.

In a preferred embodiment, a mass component is provided on a mounting seat (not shown in FIG. 6) of the zoom device 130. The mass component is similar to the vibration damping device 122 in the vibration damping structure 400 shown in FIG. 4, and has the effective mass m2. When the camera module 100 (e.g., night vision binoculars or night vision sight scopes) experiences a horizontal sway, an opposite sway is generated due to inertia of the zoom device 130 and the mass component, the horizontal linear spring provides the zoom device 130 with a restoring force to the zoom device 130 to pull it back in the opposite direction of the original sway, thus generating horizontal simple harmonic motion, while the damper dissipates the energy of the sway, gradually stopping the sway. Similarly, when the camera module 100 experiences a vertical sway, the vertical sway gradually stops due to the effect of the vertical elastic component and the vertical damping component. When night vision binoculars experience a vibration torqueing along a horizontal axis, an opposite torsion is generated due to the inertia of the lens, and the horizontal axis rotational elastic component provides a restoring force for the opposite torsion, thus generating horizontal axis rotational simple harmonic vibration, while the horizontal rotational damping component dissipates the energy of the torsional vibration, gradually stopping the torsion. Similarly, the torsional vibration of the vertical axis can also be achieved the purpose of vibration damping based on a similar principle. In some embodiments, to achieve better vibration damping effects, elastic components, rotational elastic components, dampers and rotational dampers can be installed at fixed angles (e.g., 10 degrees) between the camera module 100 and its housing 20, which can more efficiently and quickly suppress vibrations transmitted from various angles.

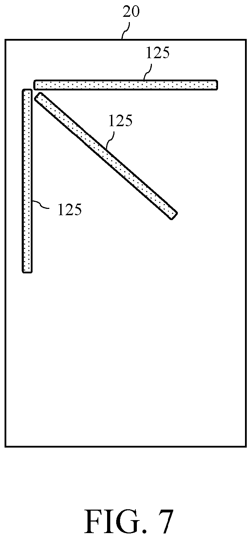

FIG. 7 is a schematic diagram illustrating an active anti-vibration function of a camera sight system according to some embodiments of the present disclosure.

In some embodiments, multiple piezoelectric sheets 125 may be disposed on a same surface of the housing 20 of the camera module 100 to achieve the active anti-vibration function for the camera sight system 10. For example, the piezoelectric sheets 125 are disposed at fixed angles (e.g., 30 degrees, 45 degrees, 90 degrees, etc.) on the same surface (e.g., including one of the upper surface, bottom surface and side surfaces) of the housing 20. When the camera module 100 is affected by external vibrations, each piezoelectric sheet 125 is also synchronously affected by the external vibrations and deforms, generating a corresponding piezoelectric signal that is fed back to a microcontroller (not shown in FIG. 1) in the camera module 100. Moreover, the microcontroller may collect the piezoelectric signals from the respective piezoelectric sheets 125 to generate control signals with the same frequency and amplitude but in the opposite phase to feed back to the respective piezoelectric sheets 125, enabling each piezoelectric sheet 125 to produce counter-vibrations to offset the external vibrations, thereby achieving the effect of active vibration suppression and active anti-vibration. In a preferred embodiment, three piezoelectric sheets 125 may be disposed on the same surface of the housing 20, and they are disposed along the horizontal direction, the vertical direction and a 45-degree angle direction, respectively. Thus, the microcontroller in the camera module 100 can more accurately analyze the amplitude, frequency, and direction of the external vibration based on the piezoelectric signals detected by the three piezoelectric sheets 125, and then generate control signals with the same frequency and amplitude but in the opposite phase to feed back to the three piezoelectric sheets 125, thereby enabling the three piezoelectric sheets 125 to generate counter-vibrations to offset the external vibration. In some embodiments, a set of three piezoelectric sheets 125can be arranged on each of different surfaces of the housing 20 of the camera module 100 in a similar manner to achieve a similar active anti-vibration effect.

The scope of the present disclosure is not intended to be limited to the specific embodiments of the processes, machines, manufactured products, substance compositions, means, methods, steps or operations stated in the detailed description. A person skilled in the art would be able to understand from the description of the present disclosure that any currently existing or future potential processes, machines, manufactured products, substance compositions, means, methods, steps or operations can be implemented according to the present disclosure so as to perform substantially the same functions or achieve substantially the same results as the corresponding embodiments described above. Accordingly, the scope of the appended claims of the present disclosure is intended to encompass these processes, machines, manufactured products, substance compositions, means, methods, steps or operations. Moreover, each technical solution forms an independent embodiment, and all combinations of the claims and the embodiments are also encompassed within the scope of the present disclosure.

Despite that numerous features and advantages of the present disclosure as well as the structural and functional details of the present disclosure are described above, it should be noted that the present disclosure is merely illustrative. Within the scope of principles of the present disclosure, modifications may be made to the details, and more particular to the shapes, sizes and configurations of the components. These modifications are fully consistent with the broadest general meaning expressed by the appended claims.

## Claims

1. A camera sight system (10), comprising:
a camera module (100), comprising:
a zoom device (130), comprising:
a scope (132), for receiving incident light;
a plurality of prisms (134, 134A-134D);
a plurality of periscopes (131, 131A-131D); and
an autofocus motor (133); and
a sensor device (110), for sensing incident light passing through an optical path of the zoom device to generate a scene image;
wherein the scope, the plurality of periscopes, and the plurality of prisms form the optical path (230, 232) with multiple refractions and multiple transmissions, and
wherein the autofocus motor is configured to adjust displacement of the plurality of periscopes along the optical path according to a control signal to adjust focal lengths of the plurality of periscopes to change an overall length of the optical path.

2. The camera sight system according to claim 1, further comprising an eyeglasses module (200), which comprises:
a communication module (220), configured to communicatively connect to the camera module; and
a display apparatus (210), configured to receive the scene image generated by the sensor device from the camera module, and display the scene image,
wherein the scene image comprises a crosshair pattern.

3. The camera sight system according to claim 2, wherein:
the plurality of prisms comprise a first prism (134A), a second prism (134B), a third prism (134C), and a fourth prism (134D), wherein the optical path (230) sequentially passes through the scope (132), the first prism, the second prism, the third prism, and the fourth prism, and
the first prism, the second prism, the third prism and the fourth prism refract the incident light by 90 degrees.

4. The camera sight system according to claim 3, wherein:
the plurality of periscopes comprise a first periscope (131A) and a second periscope (131B), disposed between the second prism and the third prism and perpendicular to the optical path (230); and
the autofocus motor is configured to adjust the displacement of the first periscope and the second periscope on a horizontal axis according to the control signal.

5. The camera sight system according to claim 3, wherein:
the plurality of periscopes comprise a first periscope (131A), a second periscope (131B), a third periscope (131C), and a fourth periscope (131D);
the first periscope and the second periscope are disposed between the first prism (134A) and the second prism (134B), and are perpendicular to the optical path (232);
the third periscope and the fourth periscope are disposed between the third prism and the fourth prism, and are perpendicular to the optical path; and
the autofocus motor is configured to adjust the displacement of the first periscope, the second periscope, the third periscope, and the fourth periscope on a vertical axis according to the control signal.

6. The camera sight system according to claim 1, wherein the sensor device comprises a color image sensor (112), a thermal imager (113), a night vision apparatus (114), or a germanium silicon (GeSi) sensor (115).

7. The camera sight system according to claim 1, wherein the camera module comprises a tuned damper, and the tuned damper and the camera module form a tuned vibration damping structure (400).

8. The camera sight system according to claim 1, wherein the camera module further comprises a gyroscope (124), and the zoom device is disposed on the gyroscope to damp vibrations of the zoom device.

9. The camera sight system according to claim 1, wherein the zoom device comprises a housing (20), and an elastic component and a damping component are disposed between the zoom device and the housing to damp vibrations of the zoom device.

10. The camera sight system according to claim 1, wherein:
the zoom device comprises a housing (20), and a plurality of piezoelectric sheets (125) are disposed at fixed angles on a same surface of the housing, and are for detecting external vibrations of the camera module to generate corresponding piezoelectric signals; and
the camera module further comprises a microcontroller for analyzing the piezoelectric signals from the piezoelectric sheets to generate control signals with a same frequency and amplitude in an opposite phase to feed back to the piezoelectric sheets to damp vibrations of the zoom device.
